# EUROPEAN PATENT APPLICATION

(11) **EP 1 394 119 A1**
(43) Date of publication of application: **03.03.2004**
(21) Application number: 02705088.9
(22) Date of filing: 06.03.2002
(51) Int. Cl.: C02F 1/467, C01B 13/10, C25B 1/13, C25B 11/04

(54) **METHOD AND APPARATUS FOR GENERATING OZONE BY ELECTROLYSIS**

(30) Priority: 14.03.2001 JP 2001071895
(71) Applicant: Sanyo Electric Co., Ltd., Moriguchi-shi, Osaka 570-8677 (JP)
(72) Inventor: KONDO, Yasuhito, Ora-gun, Gunma 370-0514 (JP); HIRO, Naoki, Osaka-shi, Osaka 536-0006 (JP); IKEGAMI, Kazuo, Takatsuki-shi, Osaka 569-1024 (JP); SHIMIZU, Yasuhiko, Ora-gun, Gunma 370-0603 (JP); ISEKI, Masahiro, Ota-shi, Gunma 373-0852 (JP)
(74) Representative: Grey, Ian Michael
(86) International application number: PCT/JP2002/002094
(87) International publication number: WO 2002/072481

(57) **Abstract**

There are provided an ozone producing method and apparatus capable of significantly increasing an amount of ozone produced in for-treatment water. In the ozone producing method of the present invention, a noble metal is used as a material constituting the anode, and the for-treatment water contains halogen ions or a compound containing halogen ions.

## Description

### BACKGROUND OF THE INVENTION

### Field of the Invention

The present invention relates to a method and apparatus for producing ozone in water to be treated (hereinafter, "water to be treated" will be referred to as "for-treatment water") through electrolysis by passing current between an anode and a cathode.

### Description of the Related Art

Heretofore, as a method of removing bacteria, fungi and microorganisms such as a protozoan in for-treatment water to be used as drinking water for domestic use or in a kitchen, a method comprising carrying out sterilization and purification by use of a chlorine-containing agent such as sodium hypochlorite has been used. However, chlorine-resistant bacteria, spores and protozoans contained in the above for-treatment water are difficult to remove by use of only hypochlorous acid. Hence, a method comprising carrying out sterilization and purification by use of ozone is used.

As a method of producing ozone in this case, it has been commonly practiced to produce ozone by use of electrodes made of lead dioxide.

However, in view of a detrimental effect of lead on a person's health, a method as described above which uses lead dioxide in electrodes cannot be used when the for-treatment water directly influences a human body, i.e., when it is used for cooking or washing vegetables or cooking utensils, and ozone-containing for-treatment water purified by the above method has been used only for applications in which the for-treatment water does not directly influence a human body, e.g., for cleaning a floor in a kitchen.

For this reason, to sterilize and purify drinking water (for-treatment water) such as tap water in such a case as described above where the water is used for cooking or washing cooking utensils, sterilization and purification of the water are performed by, for example, applying a high voltage between electrodes in an atmosphere by means of a separate device so as to cause surface creepage on surfaces of the electrodes, producing ozone from oxygen by the creepage, and dissolving the produced ozone in the for-treatment water reserved in a treatment tank or the like.

However, in the case of the foregoing method of sterilizing and purifying for-treatment water, since an amount of ozone dissolved in the for-treatment water is small, a sterilizing effect of the ozone is not at a satisfactory level. Further, the method also has a problem that since the amount of the ozone dissolved in the for-treatment water decreases with the passage of time, the amount of the ozone becomes already very small when the for-treatment water is carried by means of a pipe or the like to where the water is to be used after dissolution of the ozone, so that the amount of the ozone remaining in the for-treatment water is short of an amount required for sterilization.

Further, the ozone producing method in the foregoing method has a problem that it is not suitable for practical use since its energy consumption is significant.

Under the circumstances, the present invention has been invented to solve the conventional technical problems. An object of the present invention is to provide an ozone producing method and apparatus which are capable of significantly increasing an amount of ozone produced in for-treatment water.

### SUMMARY OF THE INVENTION

A method for producing ozone by electrolysis according to the present invention is a method for producing ozone in for-treatment water through electrolysis by passing current between an anode and a cathode, wherein a noble metal is used as a material constituting the anode, and the for-treatment water contains halogen ions or a compound containing halogen ions.

Further, in the method for producing ozone by electrolysis according to the present invention, in addition to the above invention, the halogen ions are chloride ions.

Further, in the method for producing ozone by electrolysis according to the present invention, in addition to the above inventions, the anode is made of platinum, platinum-coated titanium, a platinum-coated titanium alloy, titanium coated with a platinum-iridium alloy, a titanium alloy coated with a platinum-iridium alloy, titanium coated with a platinum-iridium-tantalum alloy, or a titanium alloy coated with a platinum-iridium-tantalum alloy.

Further, in the method for producing ozone by electrolysis according to the present invention, in addition to the above inventions, a cation exchange film is disposed between the anode and the cathode.

Further, in the method for producing ozone by electrolysis according to the present invention, in addition to the above inventions, the for-treatment water is cooled.

Further, in the method for producing ozone by electrolysis according to the present invention, in addition to the above inventions, a value of the current passed between the anode and the cathode is controlled.

An apparatus for producing ozone according to the present invention is an ozone producing apparatus having an anode and a cathode which are immersed in for-treatment water in an electrolysis vessel, wherein the anode is made of a noble metal, and current is passed between the anode and the cathode so as to electrolyze the for-treatment water containing halogen ions or a compound containing halogen ions, thereby producing ozone in the for-treatment water.

Further, in the ozone producing apparatus according to the present invention, in addition to the above invention, the halogen ions are chloride ions.

Further, in the ozone producing apparatus according to the present invention, in addition to the ozone producing apparatuses of above inventions, the anode is made of platinum, platinum-coated titanium, a platinum-coated titanium alloy, titanium coated with a platinum-iridium alloy, a titanium alloy coated with a platinum-iridium alloy, titanium coated with a platinum-iridium-tantalum alloy, or a titanium alloy coated with a platinum-iridium-tantalum alloy.

Further, in the ozone producing apparatus according to the present invention, in addition to the ozone producing apparatuses of above inventions, a cation exchange film is disposed between the anode and the cathode.

Further, the ozone producing apparatus according to the present invention, in addition to the ozone producing apparatuses of above inventions, has cooling means for cooling the for-treatment water.

Further, the ozone producing apparatus according to the present invention, in addition to the ozone producing apparatuses of above inventions, has a controller for controlling a value of the current passed between the anode and the cathode.

### BRIEF DESCRIPTION OF THE DRAWINGS

Fig. 1 is a schematic explanatory diagram of an ozone producing apparatus of the present invention.
Fig. 2 is a diagram showing potentials with respect to currents when a platinum-coated titanium electrode is used.
Fig. 3 is a diagram showing potentials with respect to currents when an electrode made of titanium coated with platinum and iridium is used.
Fig. 4 is a diagram showing potentials with respect to currents when an electrode made of titanium coated with platinum, iridium and tantalum is used.
Fig. 5 is a diagram showing amounts of contained ozone with respect to for-treatment water temperatures.
Fig. 6 is a diagram showing effective chlorine concentrations on the above electrodes with respect to for-treatment water temperatures.
Fig. 7 is a diagram showing a decrease in concentration of an endocrine disruptor by electrolysis.

### BEST MODE FOR CARRYING OUT THE INVENTION

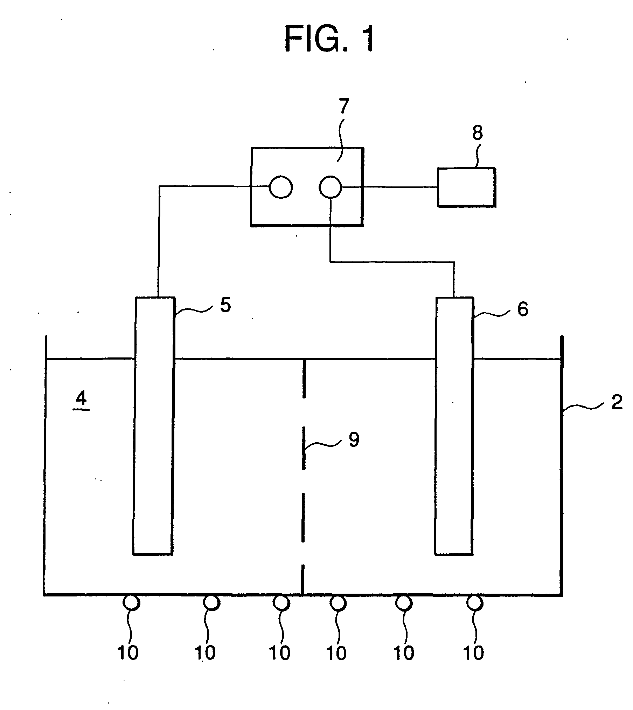

Hereinafter, an embodiment of the present invention will be described in detail with reference to the drawings. Fig. 1 is an explanatory diagram showing an outline of an ozone producing apparatus 1 for implementing an ozone producing method of the present invention. The ozone producing apparatus 1 in the present embodiment comprises an electrolysis vessel 2 which constitutes a treating chamber 4 having an inlet and an outlet for for-treatment water therein, the inlet and the outlet being not shown, a pair of electrodes, i.e., an anode 5 and a cathode 6, which are opposed to each other such that at least portions thereof are immersed in for-treatment water in the treating chamber 4, a power supply 7 for energizing the electrodes 5 and 6, and a controller 8 for controlling the electrodes 5 and 6 and an electric current value. In Fig. 1, reference numeral 9 denotes a cation exchange film disposed between the anode 5 and the cathode 6 in the electrolysis vessel 2, and reference numerals 10 denote cooling devices for cooling the for-treatment water in the electrolysis vessel 2 which are disposed, for example, at the bottom of the electrolysis vessel 2.

The anode 5 is made of a noble metal such as platinum, platinum-coated titanium, a platinum-coated titanium alloy, titanium coated with a platinum-iridium alloy, a titanium alloy coated with a platinum-iridium alloy, titanium coated with a platinum-iridium-tantalum alloy, or a titanium alloy coated with a platinum-iridium-tantalum alloy. Meanwhile, the cathode 6 is made of the same noble metals as can be used in the anode 5 or an insoluble material or carbon.

Further, as the for-treatment water in the present embodiment, tap water containing chloride ions is used, for example.

With the arrangement described above, for-treatment water is reserved in the treating chamber 4 in the electrolysis vessel 2, and the controller 8 turns on the power supply 7 so as to energize the anode 5 and the cathode 6. Thereby, microorganisms contained in the for-treatment water are attracted to the anode 5 which is positively charged since the microorganisms are generally negatively charged. Further, at the anode 5, chloride ions contained in the for-treatment water produce chlorine by discharging electrons. Thereafter, the chlorine dissolves in the water so as to produce hypochlorous acid. Thus, microorganisms in the for-treatment water which are present in the vicinity of the anode 5 are sterilized by the chlorine or hypochlorous acid.

Further, since the anode 5 is made of platinum, platinum-coated titanium, a platinum-coated titanium alloy, titanium coated with a platinum-iridium alloy, a titanium alloy coated with a platinum-iridium alloy, titanium coated with a platinum-iridium-tantalum alloy, or a titanium alloy coated with a platinum-iridium-tantalum alloy as described above and the for-treatment water contains the chloride ions, the potential increases and ozone is produced.

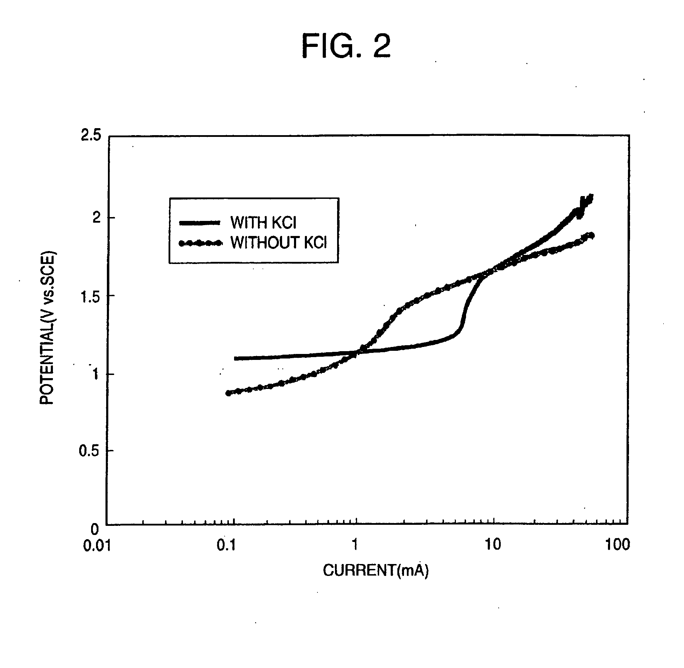

Next, an increase in the potential with or without the above chloride ions will be described with reference to Fig. 2. Fig. 2 shows potentials with respect to currents when the chloride ions are contained and not contained, with a platinum-coated titanium electrode being used as the electrode. As the for-treatment water, 1M sulfuric acid containing 10% of potassium chloride is used when the chloride ions are contained, and 1M sulfuric acid is used when the chloride ions are not contained.

Referring to Fig. 2, in the case of for-treatment water containing the chloride ions, the potential sharply increases from 1.2 V to 1.5 V when a current of 6 to 8 mA is passed, and the potential increases to 2.1 V with a current of 60 mA. Meanwhile, in the case of for-treatment water containing no chloride ions, the potential is gently increased from 0.8 V to 1.8 V as current is gradually increased from 0.1 mA to 60 mA. Thereby, it is understood that when the chloride ions are contained in the for-treatment water, the potential is significantly increased, as compared with when the chloride ions are not contained in the for-treatment water.

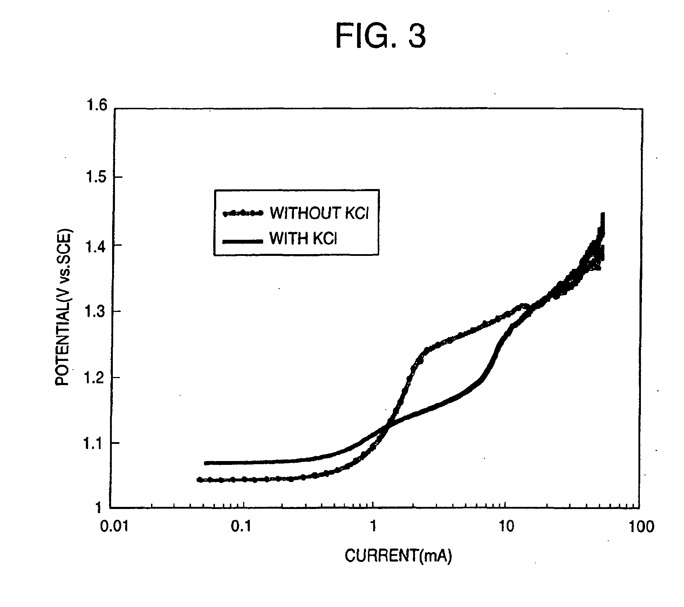

Fig. 3 is a diagram for illustrating an increase in potential with or without the chloride ions when a titanium electrode coated with platinum and iridium is used. Fig. 3 shows potentials with respect to currents when the chloride ions are contained and not contained, with titanium coated with platinum and iridium being used as the electrode. As the for-treatment water, 1M sulfuric acid containing 10% of potassium chloride is used when the chloride ions are contained, and 1M sulfuric acid is used when the chloride ions are not contained.

Referring to Fig. 3, in the case of for-treatment water containing the chloride ions, the potential increases to about 1.48 V when a current of 60 mA is passed, while in the case of for-treatment water containing no chloride ions, the potential is increased to about 1.4 V when a current of 60 mA is passed. In this case as well, it is understood that when the chloride ions are contained in the for-treatment water, the potential is increased, as compared with when the chloride ions are not contained in the for-treatment water.

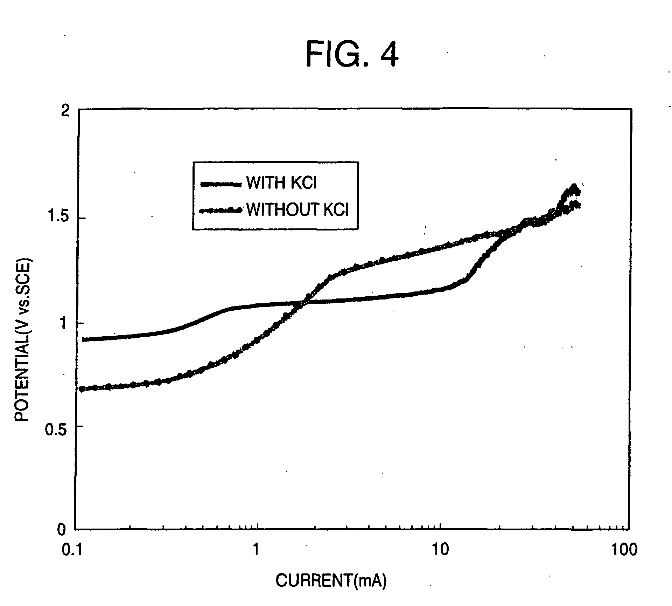

Fig. 4 is a diagram for illustrating an increase in potential with or without the chloride ions when a titanium electrode coated with platinum, iridium and tantalum is used. Fig. 4 shows potentials with respect to currents when the chloride ions are contained and not contained, with titanium coated with platinum, iridium and tantalum being used as the electrode. As the for-treatment water, 1M sulfuric acid containing 10% of potassium chloride is used when the chloride ions are contained, and 1M sulfuric acid is used when the chloride ions are not contained.

Referring to Fig. 4, in the case of for-treatment water containing the chloride ions, the potential increases to about 1.7 V when a current of 60 mA is passed, while in the case of for-treatment water containing no chloride ions, the potential is increased to about 1.6 V when a current of 60 mA is passed. In this case, a difference in potential between when the chloride ions are contained and when the chloride ions are not contained is not so significant. In this case as well, it is understood that when the chloride ions are contained in the for-treatment water, the potential is increased, as compared with when the chloride ions are not contained in the for-treatment water.

Although the present embodiment has been described by using the chloride ions contained in tap water in particular as an example, other halogen ions may be taken as examples, in addition to the chloride ions.

As is understood from the above description, when for-treatment water containing the chloride ions is electrolyzed by means of a titanium electrode coated with platinum, a titanium electrode coated with platinum and iridium or a titanium electrode coated with platinum, iridium and tantalum, ozone can be produced with ease by an increase in potential. Thereby, since ozone can be produced with a relatively small current, microorganisms, chlorine-resistant bacteria, spores and protozoans contained in for-treatment water can be eliminated by ozone which exhibits a very powerful sterilizing effect.

Further, since the electrode used in the present invention is a platinum-coated titanium electrode, chlorine or hypochlorous acid and ozone which exhibit an excellent sterilizing effect can be produced in the same electrolysis vessel 2, thereby making it possible to sterilize and purify for-treatment water efficiently.

Further, in the same electrolysis vessel 2, for-treatment water can be sterilized and purified while ozone is produced. Therefore, there is no longer need to carry out the step of dissolving ozone produced in a separate device into for-treatment water, and ozone can be contained in the for-treatment water in a significantly larger amount than a conventional amount of dissolved ozone. Thereby, sterilization and purification of for-treatment water can be carried out more securely and more efficiently.

Further, in the present invention, ozone is produced without use of lead dioxide. Therefore, sterilized and purified for-treatment water can be directly used for drinking or sterilization of cooking utensils without affecting human bodies.

In addition, in the present embodiment, since the cation exchange film 9 is disposed between the anode 5 and the cathode 6 in the electrolysis vessel 2. Thus, hydrogen ions produced by electrolysis are transferred from the anode 5 side to the cathode 6 side so as to promote production of hydrogen at the cathode 6. Thereby, the potential can be increased, and the amount of ozone produced can also be increased along with an increase in the potential.

Meanwhile, in the present embodiment, the electrolysis vessel 2 electrolyzes for-treatment water while cooling the for-treatment water by means of the conventional cooling devices 10. The results of experiments showing an effect resulting from carrying out electrolysis while for-treatment water is being cooled.

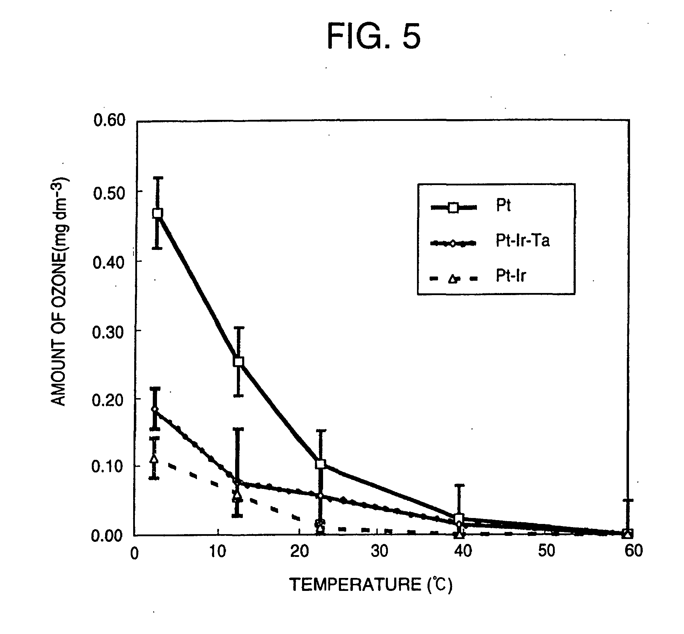

Fig. 5 is a diagram showing amounts of contained ozone with respect to a for-treatment water temperature, and electrolysis was carried out with a current of 400 mA by use of a platinum-coated titanium electrode, a titanium electrode coated with platinum and iridium, or a titanium electrode coated with platinum, iridium and tantalum.

According to Fig. 5, when the for-treatment water temperature is +3°C, the concentration of ozone is about 0.48 mg/dm³ for the platinum-coated titanium electrode, about 0.10 mg/dm³ for the titanium electrode coated with platinum and iridium, and about 0.18 mg/dm³ for the titanium electrode coated with platinum, iridium and tantalum. Then, as the for-treatment water temperature is increased for each of the electrodes, the concentration of ozone is about 0.12 mg/dm³ for the platinum-coated titanium electrode, about 0.01 mg/dm³ for the titanium electrode coated with platinum and iridium, and about 0.05 mg/dm³ for the titanium electrode coated with platinum, iridium and tantalum, at the for-treatment temperature of +22°C. Further, it is observed that as the for-treatment water temperature is further increased for each of the electrodes, ozone hardly exists for any of the electrodes at the for-treatment water temperature of +60°C.

Thus, when electrolysis is carried out while the electrolysis vessel 2 is cooled at, for example, +3°C, the concentration of ozone in for-treatment water is significantly increased, thereby making it possible to further improve the sterilizing/purifying effect.

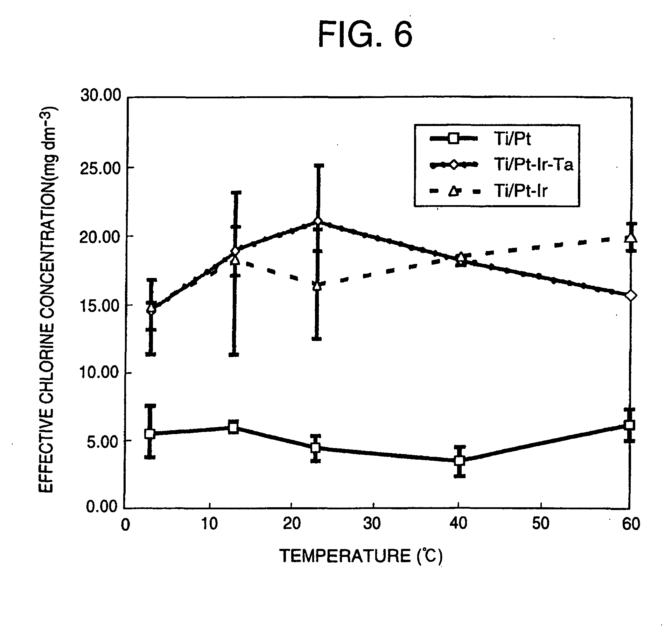

Fig. 6 is a diagram showing effective chlorine concentrations on the above electrodes with respect to for-treatment water temperatures and shows the results of experiments conducted under the same conditions as those for the experiments whose results are shown in Fig. 5. Referring to Fig. 6, with respect to for-treatment water temperatures, effective chlorine concentration for the platinum-coated titanium electrode is significantly lower than effective chlorine concentrations for other electrodes. This is assumed to be because a reaction of producing ozone occurs preferentially.

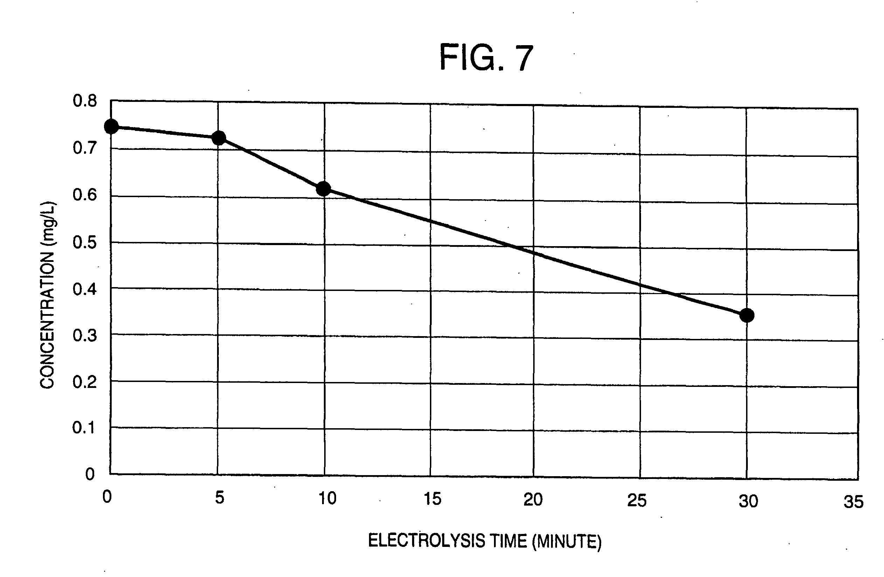

Fig. 7 is a diagram showing a decrease in concentration of an endocrine disruptor by electrolysis, which is currently considered as a problem. It is seen that when an endocrine disruptor such as di-2-ethylhexyl phthalate is contained in the foregoing for-treatment water, di-2-ethylhexyl phthalate is decreased with the passage of electrolysis time by ozone produced as described above. Thus, even if an endocrine disruptor such as di-2-ethylhexyl phthalate is contained in for-treatment water, the endocrine disruptor can be decomposed efficiently by ozone, thereby improving efficiency of purification of the for-treatment water.

Further, in the present embodiment, an electric current value can be controlled by the controller 8. Accordingly, an electric current value is controlled according to quality of for-treatment water, thereby making it possible to produce required ozone.

Thus, in the ozone producing method and apparatus 1 of the present invention, purification of for-treatment water by ozone can be carried out efficiently while power consumption is kept low.

According to the method of the present invention for producing ozone by means of electrolysis, it is a method for producing ozone in for-treatment water through electrolysis by passing current between an anode and a cathode, wherein a noble metal is used as a material constituting the anode, and the for-treatment water contains halogen ions or a compound containing halogen ions. Thereby, ozone can be produced efficiently. As for for-treatment water, even one containing chlorine-resistant bacteria which have heretofore been difficult to be sterilized can be sterilized efficiently by ozone, and in particular, the resulting sterilized water can be used as drinking water.

Further, according to the present invention, the above halogen ions are chloride ions. Thus, hypochlorous acid can be produced along with production of ozone, and the for-treatment water can be sterilized effectively by ozone and hypochlorous acid.

Further, the above anode is made of platinum, platinum-coated titanium, a platinum-coated titanium alloy, titanium coated with a platinum-iridium alloy, a titanium alloy coated with a platinum-iridium alloy, titanium coated with a platinum-iridium-tantalum alloy, or a titanium alloy coated with a platinum-iridium-tantalum alloy. Thereby, ozone can be produced more efficiently. In addition, unlike the prior art, lead dioxide is not used in the anode. Therefore, the treated water can be used for drinking or sterilizing cooking utensils or the like.

Further, since a cation exchange film is disposed between the above anode and cathode, hydrogen ions present on the anode side can be transferred to the cathode side efficiently so as to facilitate flow of current. Thereby, an increased amount of ozone can be produced.

Further, since the above for-treatment water is cooled, ozone produced as described above can be present in the for-treatment water over a relatively longer time period, so that more ozone can be present in the for-treatment water.

Further, a value of the current passed between the above anode and cathode is controlled. Thereby, the amount of ozone contained in the for-treatment water can be controlled.

According to the apparatus of the present invention for producing ozone by electrolysis, it is an ozone producing apparatus having an anode and a cathode which are immersed in for-treatment water in an electrolysis vessel, wherein the anode is made of a noble metal, and current is passed between the anode and the cathode so as to electrolyze the for-treatment water containing halogen ions or a compound containing halogen ions, thereby producing ozone in the for-treatment water. Thereby, ozone can be produced in an electrolysis vessel efficiently so as to sterilize the for-treatment water efficiently. Further, chlorine-resistant bacteria and the like which are conventionally contained in the for-treatment water can be eliminated efficiently, and the resulting treated water can be used also as drinking water or the like.

Further, in the above ozone producing apparatus, the halogen ions are chloride ions. Therefore, hypochlorous acid can be produced along with production of ozone, and the for-treatment water can be sterilized effectively by ozone and hypochlorous acid contained in the for-treatment water.

Further, in the above ozone producing apparatus, the above anode is made of platinum, platinum-coated titanium, a platinum-coated titanium alloy, titanium coated with a platinum-iridium alloy, a titanium alloy coated with a platinum-iridium alloy, titanium coated with a platinum-iridium-tantalum alloy, or a titanium alloy coated with a platinum-iridium-tantalum alloy. Thereby, ozone can be produced more efficiently. In addition, unlike the prior art, lead dioxide is not used in the anode. Therefore, the treated water can be used for drinking or sterilizing cooking utensils or the like.

Further, in the above ozone producing apparatus, since a cation exchange film is disposed between the anode and the cathode, hydrogen ions present on the anode side can be transferred to the cathode side efficiently so as to facilitate flow of current. Thereby, an increased amount of ozone can be produced.

Further, in the above ozone producing apparatus, since cooling means for cooling the for-treatment water are provided, ozone produced as described above can be present in the for-treatment water over a relatively longer time period, so that more ozone can be present in the for-treatment water.

Further, in the above ozone producing apparatus, since a controller for controlling a value of the current passed between the anode and the cathode is provided, the amount of ozone contained in the for-treatment water can be controlled with ease.

## Claims

1. A method for producing ozone in for-treatment water through electrolysis by passing current between an anode and a cathode, wherein a noble metal is used as a material constituting the anode, and the for-treatment water contains halogen ions or a compound containing halogen ions.

2. The method of claim 1, wherein the halogen ions are chloride ions.

3. The method of claim 1 or 2, wherein the anode is made of platinum, platinum-coated titanium, a platinum-coated titanium alloy, titanium coated with a platinum-iridium alloy, a titanium alloy coated with a platinum-iridium alloy, titanium coated with a platinum-iridium-tantalum alloy, or a titanium alloy coated with a platinum-iridium-tantalum alloy.

4. The method of claim 1, 2 or 3, wherein a cation exchange film is disposed between the anode and the cathode.

5. The method of claim 1, 2, 3 or 4, wherein the for-treatment water is cooled.

6. The method of claim 1, 2, 3, 4 or 5, wherein a value of the current passed between the anode and the cathode is controlled.

7. An ozone producing apparatus having an anode and a cathode which are immersed in for-treatment water in an electrolysis vessel, wherein the anode is made of a noble metal, and current is passed between the anode and the cathode so as to electrolyze the for-treatment water containing halogen ions or a compound containing halogen ions, thereby producing ozone in the for-treatment water.

8. The apparatus of claim 7, wherein the halogen ions are chloride ions.

9. The apparatus of claim 7 or 8, wherein the anode is made of platinum, platinum-coated titanium, a platinum-coated titanium alloy, titanium coated with a platinum-iridium alloy, a titanium alloy coated with a platinum-iridium alloy, titanium coated with a platinum-iridium-tantalum alloy, or a titanium alloy coated with a platinum-iridium-tantalum alloy.

10. The apparatus of claim 7, 8 or 9, wherein a cation exchange film is disposed between the anode and the cathode.

11. The apparatus of claim 7, 8, 9 or 10, which has cooling means for cooling the for-treatment water.

12. The apparatus of claim 7, 8, 9, 10 or 11, which has a controller for controlling a value of the current passed between the anode and the cathode.
